# EUROPEAN PATENT SPECIFICATION

(11) **EP 3 153 336 B1**
(45) Date of publication and mention of the grant of the patent: **30.12.2020**
(21) Application number: 16002044.2
(22) Date of filing: 21.09.2016
(51) Int. Cl.: B60D 1/32

(54) **SYSTEM FOR CONTROLLING YAW OSCILLATIONS OF A VEHICLE WITH TRAILER**
SYSTEM ZUR STEUERUNG VON GIERSCHWINGUNGEN EINES FAHRZEUGS MIT ANHÄNGER
SYSTEME DE COMMANDE D'OSCILLATIONS DE LACET D'UN VEHICULE EQUIPE D'UNE REMORQUE

(30) Priority: 09.10.2015 IT UB20154258
(43) Date of publication of application: 12.04.2017
(73) Proprietor: Rolfo S.p.A., 12042 Bra (CN) (IT)
(72) Inventor: Rolfo, Giorno, I-12042 BRA (CN) (IT); Arnulfo, Elio, I-12042 BRA (CN) (IT)
(74) Representative: Garavelli, Paolo

(56) References cited:
- WO-A1-01/58708
- US-A- 4 025 085
- US-B1- 7 261 312

## Description

The present invention refers to a system for controlling yaw oscillations of a vehicle with trailer.

In particular, the present invention refers to a system for counteracting a yaw movement applied to the towing system of a truck in order to improve the motion management of the vehicle towing a trailer with central axle.

It is known how risks and dangers of uncontrolled yaw and snaking of truck trailers are an important problem, above all under disconnected road plane conditions, scarce adherence, high descents and vehicle advancement speed (usually over 50 Km/h), wherein these risks can also make the trailer overturn.

Devices are known to limit the yaw motion amplitude, comprising side telescopic arms with dampening effect assembled on both sides of the towing system of the trailer with respect to the vehicle. Such telescopic arms allow strongly limiting the yaw oscillation amplitude. However, a danger remains in case of big sized trailers or with a big weight or load.

The prior art is given, in particular, by document EP1200276B1, wherein a device is disclosed for dampening the yaw between a road vehicle and its related trailer, such device being composed of a curvilinear dampening guide on which a friction device operates, for example a pneumatic device assembled onto the towing system. The friction device is composed of friction pads pressed against the curvilinear guide by an actuator, for example a pneumatic actuator. The intensity of the pressing force changes depending on the trailer load and/or the vehicle speed, allowing to automatically adjust the yaw dampening. Such adjustment depends on whether the actuator is automatically controlled by the suspension pressure and/or the vehicle speed.

The arrangement of document EP1200276B1 allows controlling the yaw oscillation of a vehicle by introducing a dissipation force through the friction pads against the curvilinear guide, during the relative movement of the trailer with respect to the vehicle.

However, the arrangement of document EP1200276B1 needs a continuous control of the friction force created in order to counteract the energy introduced by the yaw oscillation and therefore does not help solving the problem of creating a stable system which automatically counteracts the yaw oscillation. The document US 7 261 312 B1 discloses a system according to the preamble of claim 1.

The first detachment friction, commonly greater than the dynamic friction, introduces a system rigidity which negatively affects driving the vehicle.

Since friction surfaces are exposed to external agents, the friction coefficient can greatly change with rain, relative humidity, dirt, oils and greased which can be easily deposited.

Moreover, the force introduced through the friction pads is the single counteract to the yaw oscillation phenomenon. In case of wear of the friction pads pressing onto the curvilinear guide, the counteracting effect to the yaw oscillation can be lost. Therefore, it is necessary to make a maintenance program to continuously ensure the dampening efficiency of the friction pads.

Therefore, object of the present invention is solving the above prior art problems, by providing a system for controlling yaw oscillations of a vehicle with trailer which ensures a force capable of counteracting in time the instability phenomena introduced by the yaw of the dynamic system composed of vehicle and related towed trailer, even without dissipating friction forces, under conditions, per example, in which friction is degraded due to the presence of lubricants or humidity or breakage or wear of the pads.

A further object is providing a system for controlling yaw oscillations of a vehicle with trailer which exploits, as elastic force, the same force generated through a system of pneumatic suspensions already in use for vehicle and/or trailer.

The above and other objects and advantages of the invention, as will appear from the following description, are obtained with a system for controlling yaw oscillations of a vehicle with trailer as claimed in claim 1. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the invention as appears from the enclosed claims.

The present invention will be better described by some preferred embodiments thereof, provided as a non-limiting example, with reference to the enclosed drawings, in which:

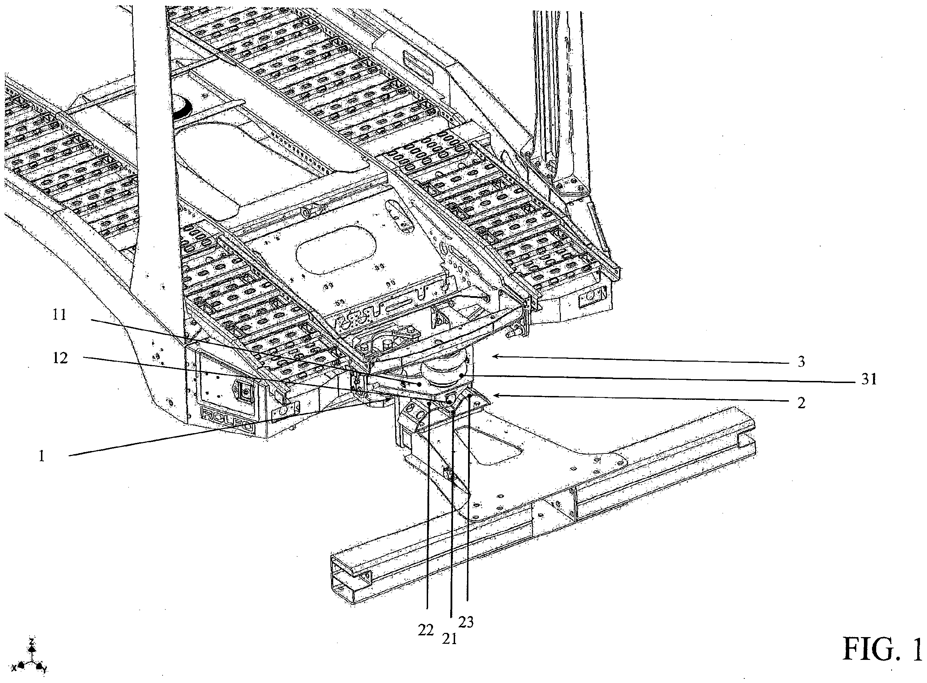

- Figure 1 shows a perspective view of a first configuration of a towing system of a vehicle connected to a trailer comprising an embodiment of the system for controlling yaw oscillations of a vehicle with trailer according to the present invention;

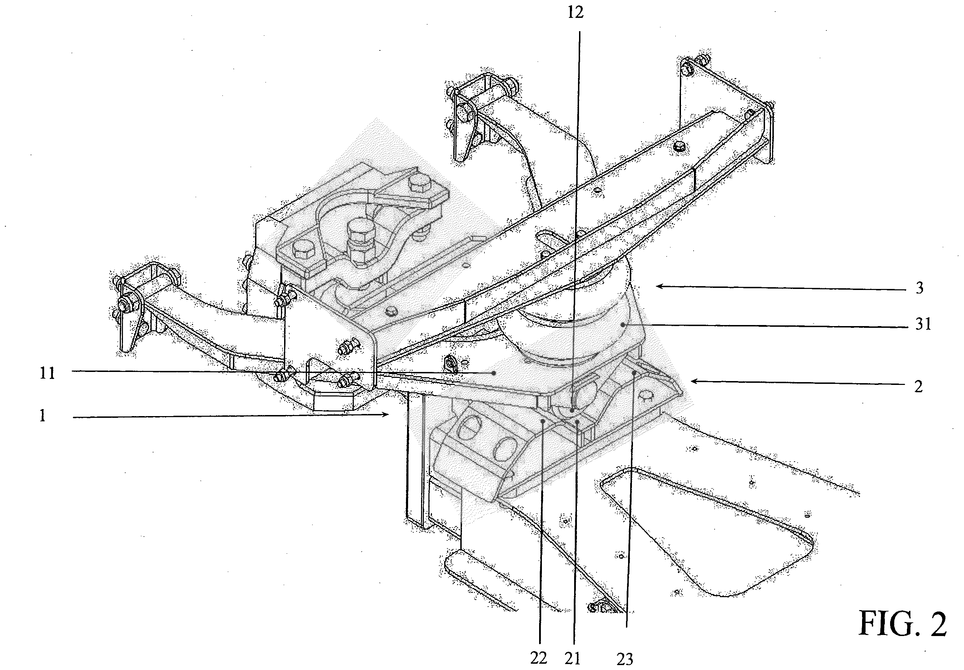

- Figure 2 shows an enlarged part of the previous Figure; and
- Figure 3 shows a perspective view of a second configuration of a towing system of a vehicle connected to a trailer comprising a preferred embodiment of the system for controlling yaw oscillations of a vehicle with trailer according to the present invention;
- Figure 4 shows a front view of the first configuration, perfectly aligned, of a towing system of a vehicle connected to a trailer comprising an embodiment of the system for controlling yaw oscillations of a vehicle with trailer according to the present invention; and
- Figure 5 shows a perspective view of an enlarged part derived from the previous Figure.

With reference to the Figures, it is noted that a system for controlling yaw oscillations of a vehicle with trailer comprises oscillating means 1 and abutment means 2 interacting with the oscillating means 1 through at least one actuator 3 adapted to counteract the relative movement energy between the vehicle and the trailer.

In particular, the Figures show a preferred embodiment of the system according to the present invention, which will be described below as an example, in which the oscillating means 1 are oscillating, by means of at least one lever 11, with respect to the vehicle and the abutment means 2 are integral with the trailer: in this case the abutment means 2 comprise at least one concave housing 21 adapted to receive, and possibly stably house, the oscillating means 1 so that the longitudinal vertical centerline plane of the vehicle is aligned with at least one longitudinal trace of the longitudinal vertical centerline plane of the trailer.

It is however clearly evident to the skilled person in the art that a system could also be provided in which, conversely, the oscillating means 1 are oscillating, by means of at least one lever 11, with respect to the trailer and the abutment means 2 are integral with the vehicle without thereby departing from the scope of the present invention: the abutment means 2 comprise at least one concave housing 21 adapted to receive, and possibly stably house, the oscillating means 1, by means of at least one lever 11, so that the longitudinal vertical centerline plane of the trailer is aligned with at least one longitudinal trace of the longitudinal vertical centerline plane of the vehicle. It follows, obviously, that what is described herein below with reference to the example embodiment of the Figures, can be easily modified by the skilled person in the art in order to adapt it to this latter and further possible embodiment of the system according to the present invention, even if not specifically shown and described.

The lever 11 comprises at least one roller 12 pivoted with respect to the lever 11 adapted to slide with respect to the concave housing 21 and allow the abutment means 2 to receive, and possibly stably house, the oscillating means 1.

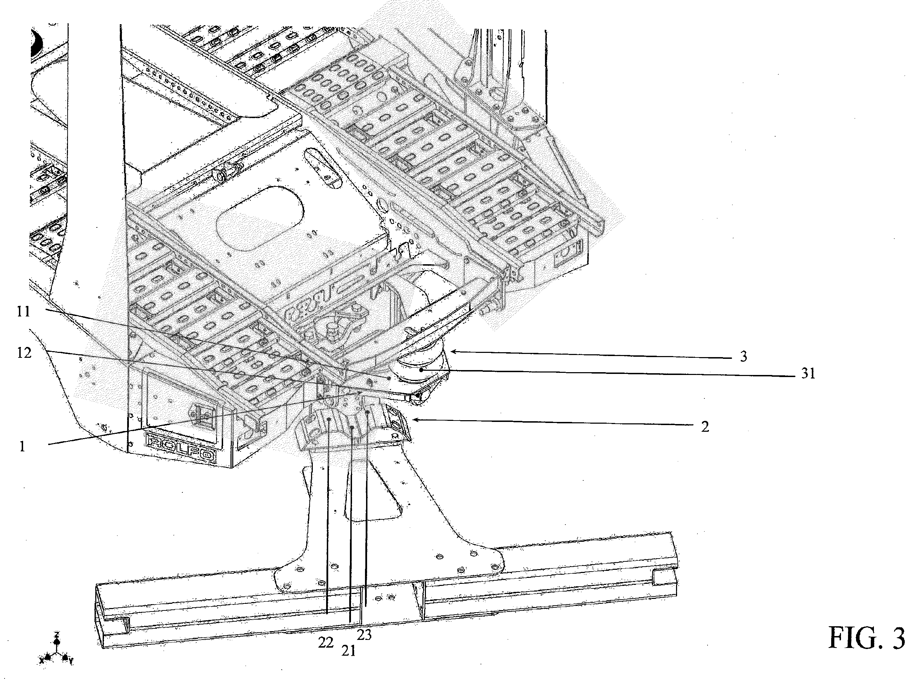

With reference to Figure 3, it is possible to note that the abutment means 2 comprise at least one guide 22, 23 adapted to allow the free sliding of the roller 12.

In particular, per a slanting of the vehicle with respect to the trailer which is greater than a given angle, the roller 12 is uncoupled with respect to the concave housing 21.

According to the invention, the roller 12 lays with its own rotation axis in the longitudinal vertical centerline plane of the vehicle (or of the trailer, in case of the not shown embodiment of the system according to the present invention), while the concave housing 21 and at least one of such guides 22, 23 lay symmetrically with respect to the longitudinal vertical centerline plane of the trailer (or of the vehicle, always in case of the not shown embodiment of the system according to the present invention).

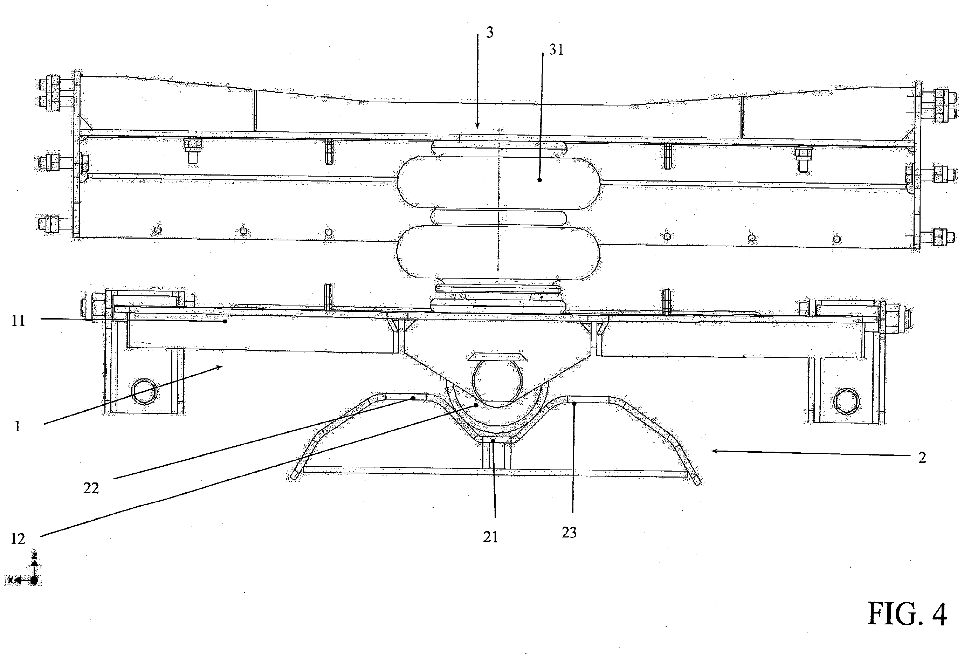

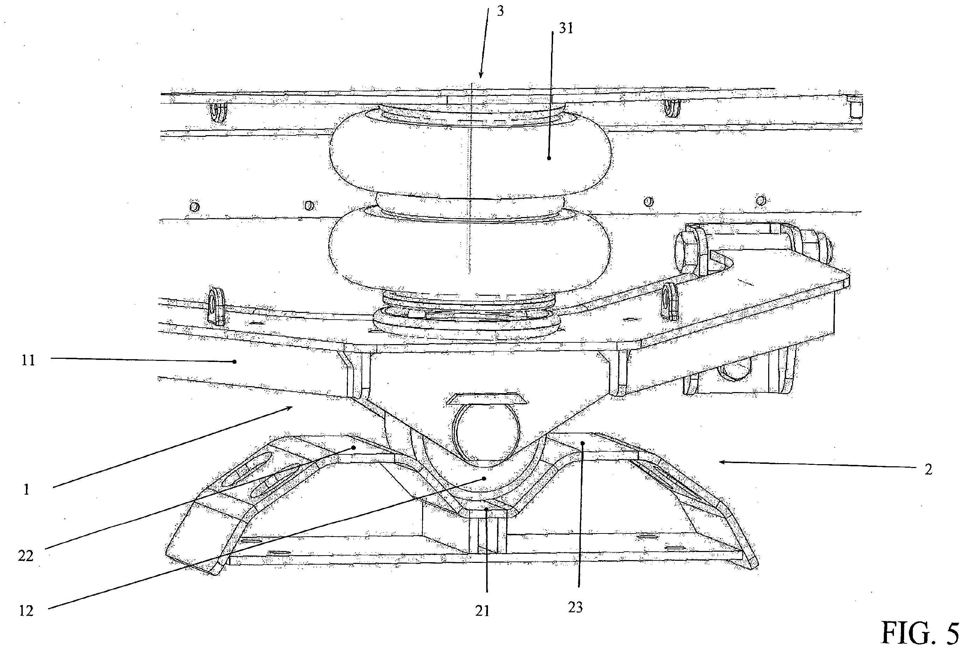

With reference to Figures 4 and 5, it is possible to note that the concave housing 21 is composed of a pair of symmetrical planes slanted by about 45°, the roller 12 being therefore adapted to press against the pair of planes slanted by about 45° remaining lifted with respect to the bottom of the concave housing 21.

Preferably, the actuator 3 comprises at least one elastic element 31 adapted to exert a controlled force onto the abutment means 2, through the oscillating means 1, depending on at least one chosen parameter, per example and preferably, between the transported load, the speed of the vehicle with trailer, a slant angle of the trailer with respect to the vehicle.

Preferably, the elastic element 31 exerts a force having an increasing amount when the movement speed of the vehicle increases, and a force having a minimum or null amount when the slant angle of the trailer with respect to the vehicle increases.

According to a preferred embodiment, the elastic element 31 comprises at least one pneumatic spring. Moreover, the energy used to drive the actuator 3 derives from a suspension system of the vehicle and/or of the trailer like those substantially known in the art.

The system for controlling yaw oscillations of a vehicle with trailer can further comprise dampening devices to degrade the rubbing energy in order to obtain a dampening effect of the yaw oscillations. In particular, the roller 12 can be pivoted with respect to its own rotation axis through at least one sliding support.

The system for controlling yaw oscillations of a vehicle with trailer of the present invention reaches its preset objects.

Substantially, such system is based on a roller integral with the tractor, which presses onto a concave housing integral with the trailer in the rudder. According to the invention the roller is pressed downwards onto the concave housing through a pneumatic spring, but it could be any elastic element which can provide a force and absorb height variations. The concave housing is placed so that the roller is inserted when tractor and trailer are longitudinally aligned. When the trailer tends to move away from this balance by rotating on the towing member along a vertical axis, creating an angle between the two vertical planes passing by the longitudinal axis of tractor and trailer, the vertical force of the roller on one of the two slanted planes, according to the rotation direction, creates a transverse component, which tends to bring back tractor and trailer aligned to the longitudinal vertical plane of the vehicle assembly. This happens as long as the roller does not exceed the angle of the concave housing and the plane on which it rests becomes horizontal. The concave housing is sized so that this point corresponds to such an angle between the longitudinal vertical planes that it is created usually only for road bends which can be travelled only ad limited speeds, lower than 50 km/h. Under these conditions, experience shows that yaw oscillations phenomena are very limited, if not non-existing. When the vehicle travels on bends having a narrow radius, in which the angle between tractor and trailer assumes high values, even near 90°, like in hairpin bends or in maneuvers, the roller goes out of the concave housing. This latter one, in fact, has a short transverse development to allow the vehicle assembly its own described great angle without interfering with the towing members of the tractor. Under these conditions, however, the vertical force is strongly limited by reducing the pressure in the pneumatic spring. In fact, this happens only at very low speeds. The system then operates only at greater speeds, approximately at 40 - 50 km/h.

The intensity of the transverse force depends on the vertical force and on the angle of the slanted plane. The system is almost insensitive to relative rotations between tractor and trailer along the respective horizontal axes, thereby allowing the vehicle assembly to travel on different roads without negatively affecting the guide.

With respect to known devices, differences and following obtained advantages are substantial:
- the system according to the present invention is not based on friction, but on exploiting slanted planes;
- the system according to the present invention allows completely removing the sliding noise;
- the system according to the present invention is efficient only when necessary, for small yaw angles.

## Claims

1. System for controlling yaw oscillations of a truck with trailer, said system comprising oscillating means (1), abutment means (2) interacting with said oscillating means (1) through at least one actuator (3) adapted to counteract a relative movement energy between said vehicle and said trailer by exerting a vertical downward-pressing force between them through a pneumatic spring or any elastic element which can provide a force and absorb height variations, **characterized in that** said abutment means (2) comprise at least one concave housing (21) adapted to receive said oscillating means (1), said oscillating means (1) being oscillating, by means of at least one lever (11), with respect to said vehicle and said abutment means (2) being integral with said trailer so that a longitudinal vertical centerline plane of said vehicle is aligned with at least one longitudinal trace of a longitudinal vertical centerline plane of said trailer, or said oscillating means (1) being oscillating, by means of at least one lever (11), with respect to said trailer and said abutment means (2) being integral with said vehicle so that a longitudinal vertical centerline plane of said trailer is aligned with at least one longitudinal trace of a longitudinal vertical centerline plane of said vehicle, said lever (11) comprising at least one roller (12) placed at the center of said lever (11) in said concave housing (21) and being actuated by said actuator (3), said roller (12) being pivoted with respect to said lever (11) in order to slide with respect to said concave housing (21) and allow said abutment means (2) to receive said roller (12) of said oscillating means (1) into said concave housing (21), said concave housing (21) being adapted to receive, and possibly stably house, said oscillating means (1) so that the longitudinal vertical centerline plane of the vehicle is aligned with at least one longitudinal trace of the longitudinal vertical centerline plane of said trailer, said roller (12) pressing onto said concave housing (21) integral with the trailer, said roller (12) being pressed downwards onto said concave housing (21) through said pneumatic spring or said elastic element, said concave housing (21) being placed so that said roller (12) is inserted when tractor and trailer are longitudinally aligned, said abutment means (2) comprising at least one guide (22, 23) adapted to allow a free sliding of said roller (12), said roller (12) being uncoupled with respect to said concave housing (21) for a slanting of said vehicle with respect to the trailer which is greater than a given angle, said roller (12) laying with its own rotation axis in a longitudinal vertical centerline plane of said vehicle or of said trailer, and **in that** said concave housing (21) and said at least one guide (22, 23) lay symmetrically with respect to said longitudinal vertical centerline plane of said trailer or of said vehicle.

2. System for controlling yaw oscillations of a vehicle with trailer according to the previous claim, **characterized in that** said concave housing (21) is composed of a pair of symmetrical planes slanted by about 45°, said roller (12) being adapted to press against said pair of planes slanted by about 45° remaining lifted with respect to a bottom of said concave housing (21).

3. System for controlling yaw oscillations of a vehicle with trailer according to any one of the previous claims, **characterized in that** said actuator (3) comprises at least one elastic element (31) adapted to exert a controlled force onto said abutment means (2) through said oscillating means (1) depending on at least one parameter, said parameter being preferably chosen among transported load, speed of said vehicle with trailer, slant angle of said trailer with respect to said vehicle.

4. System for controlling yaw oscillations of a vehicle with trailer according to the previous claim, **characterized in that** said elastic element (31) exerts a force having an increasing amount when the movement speed of said vehicle increases, and a force having a minimum or null amount when said slant angle of said trailer with respect to said vehicle increases.

5. System for controlling yaw oscillations of a vehicle with trailer according to the previous claim, **characterized in that** said elastic element (31) comprises the pneumatic spring and **in that** an energy used to drive said actuator (3) derives from a suspension system of said vehicle and/or of said trailer.

6. System for controlling yaw oscillations of a vehicle with trailer according to claim 1, **characterized in that** it comprises dampening devices to degrade a rubbing energy in order to obtain a dampening effect of said yaw oscillations and **in that** said roller (12) is pivoted with respect to its own rotation axis through at least one sliding support.

## Patentansprüche

1. Kontrollsystem der Gierschwingungen eines LKWs mit Anhänger, das genannte System enthält Schwingvorrichtungen (1), Anschlagvorrichtungen (2), die mit den genannten Schwingvorrichtungen (1) durch mindestens einen Antrieb (3) interagieren, der dazu dient, einer entsprechenden Bewegungsenergie zwischen dem genannten Fahrzeug und dem genannten Anhänger entgegenzuwirken, indem er eine vertikale Druckkraft nach unten durch eine pneumatische Feder oder ein beliebiges elastisches Element ausübt, das eine Kraft bieten und Höhenveränderungen absorbieren kann, das **dadurch gekennzeichnet ist, dass** die genannten Anschlagvorrichtungen (2) mindestens eine konkave Aufnahme (21) enthalten, die dazu dient, die genannten Schwingvorrichtungen (1) aufzunehmen, die genannten Schwingvorrichtungen (1), die durch mindestens einen Hebel (11) gegenüber dem genannten Fahrzeug und den genannten Anschlagvorrichtungen (2) schwingen, sind integral mit dem genannten Anhänger, sodass eine vertikale Längsfläche der Mittellinie des genannten Fahrzeuges mit mindestens einer Längsspur einer vertikalen Längsfläche der Mittellinie des genannten Anhängers ausgerichtet ist, oder Schwingvorrichtungen (1), die durch mindestens einen Hebel (11) gegenüber dem genannten Anhänger schwingen, und die genannten Anschlagvorrichtungen (2) sind einteilig mit dem genannten Fahrzeug, sodass eine vertikale Längsfläche der Mittellinie des genannten Anhängers mit mindestens einer Längsspur einer vertikalen Längsfläche der Mittellinie des genannten Fahrzeuges ausgerichtet ist, der genannte Hebel (11) enthält mindestens eine Rolle (12), die in der Mitte des genannten Hebels (11) in der genannten konkaven Aufnahme (21) angebracht ist und die durch den genannten Antrieb (3) angetrieben wird, die genannte Rolle (12) ist gegenüber dem genannten Hebel (11) verbolzt, um gegenüber der konkaven Aufnahme (21) zu gleiten und um es den genannten Anschlagvorrichtungen (2) zu ermöglichen, die genannte Rolle (12) der genannten Schwingvorrichtungen (1) in der genannten konkaven Aufnahme (21) aufzunehmen, die genannte konkave Aufnahme (21) dient dazu, die genannten Schwingvorrichtungen (1) aufzunehmen und ggf. stabil zu enthalten, sodass die vertikale Längsfläche der Mittellinie des Fahrzeuges mit mindestens einer Längsspur der vertikalen Längsfläche der Mittellinie des genannten Anhängers ausgerichtet ist, die genannte Rolle (12) drückt auf die genannte konkave Aufnahme (21), die integral mit dem Anhänger ist, die genannte Rolle (2) wird durch die genannte pneumatische Feder oder das genannte elastische Element nach unten auf die genannte konkave Aufnahme (21) gedrückt, die genannte konkave Aufnahme (21) ist so angebracht, dass die genannte Rolle (12) eingesetzt wird, wenn Schlepper und Anhänger in Längsrichtung ausgerichtet sind, die genannten Anschlagvorrichtungen (2) enthalten mindestens eine Führung (22, 23), die dazu dient, ein freies Gleiten der genannten Rolle (12) zu ermöglichen, die genannte Rolle (12) ist gegenüber der genannten konkaven Aufnahme (21) durch eine Neigung des genannten Fahrzeuges gegenüber dem Anhänger entkoppelt, der höher als ein gegebener Winkel ist, die genannte Rolle (12) liegt mit ihrer Drehachse auf einer vertikalen Längsfläche der Mittellinie des genannten Fahrzeuges oder des genannten Anhängers, und die genannte konkave Aufnahme (21) und die genannte mindestens eine Führung (22, 23) liegt symmetrisch gegenüber der genannten vertikalen Längsfläche des genannten Anhängers oder des genannten Fahrzeuges.

2. Kontrollsystem der Gierschwingungen eines Fahrzeuges mit Anhänger gemäß dem vorhergehenden Patentanspruch, das **dadurch gekennzeichnet ist, dass** die genannte konkave Aufnahme (21) aus einem Paar symmetrischer, um ca. 45° geneigter Flächen besteht, die genannte Rolle (12) dient dazu, an das genannte Paar der um 45° geneigten Flächen zu drücken und gegenüber dem Boden der genannten konkaven Aufnahme (21) erhöht zu bleiben.

3. Kontrollsystem der Gierschwingungen eines Fahrzeuges mit Anhänger gemäß einem beliebigen der vorhergehenden Patentansprüche, das **dadurch gekennzeichnet ist, dass** der genannte Antrieb (3) mindestens ein elastisches Element (31) enthält, das dazu dient, durch die genannten Schwingvorrichtungen (1) aufgrund mindestens eines Parameters eine kontrollierte Kraft auf die genannten Anschlagvorrichtungen (2) auszuüben, der genannte Parameter wird vorzugsweise aus der transportierten Last, der Geschwindigkeit des genannten Fahrzeuges mit Anhänger, dem Neigungswinkel des genannten Anhängers gegenüber dem genannten Fahrzeug ausgewählt.

4. Kontrollsystem der Gierschwingungen eines Fahrzeuges mit Anhänger gemäß dem vorhergehenden Patentanspruch, das **dadurch gekennzeichnet ist, dass** das genannte elastische Element (31) eine Kraft mit zunehmendem Ausmaß bei ansteigender Bewegungsgeschwindigkeit des genannten Fahrzeuges und eine Kraft mit minimalem oder null Ausmaß bei Zunahme des genannten Neigungswinkels des genannten Anhängers gegenüber dem genannten Fahrzeug ausübt.

5. Kontrollsystem der Gierschwingungen eines Fahrzeuges mit Anhänger gemäß dem vorhergehenden Patentanspruch, das **dadurch gekennzeichnet ist, dass** das genannte elastische Element (31) die pneumatische Feder enthält und dadurch, dass eine Energie, die für die Steuerung des genannten Antriebs (3) verwendet wird, von einem Aufhängungssystem des genannten Fahrzeuges und/oder des genannten Anhängers kommt.

6. Kontrollsystem der Gierschwingungen eines Fahrzeuges mit Anhänger gemäß Patentanspruch 1, das **dadurch gekennzeichnet ist, dass** es Dämpfungsvorrichtungen enthält, um eine Energie durch Reibung zu reduzieren, um eine dämpfende Wirkung auf die genannten Gierschwingungen zu erhalten, und dadurch, dass die genannte Rolle (12) gegenüber ihrer Drehachse durch mindestens eine Gleithalterung verbolzt ist.

## Revendications

1. Système de contrôle des oscillations de lacet d'un véhicule avec remorque comprenant des moyens oscillants (1), des moyens de butée (2) qui interagissent avec les moyens oscillants (1) à travers au moins un actionneur (3) apte à contrecarrer une énergie de mouvement relatif entre le véhicule et la remorque en exerçant une force de pression verticale vers le bas entre eux à travers un ressort pneumatique ou n'importe quel élément élastique pouvant fournir une force et absorber des variations de hauteur, **caractérisé en ce que** les moyens de butée (2) comprennent au moins un logement concave (21) apte à recevoir les moyens oscillants (1) ; les moyens oscillants (1) oscillent par l'intermédiaire d'un levier (11) par rapport au véhicule tandis que les moyens de butée (2) sont solidaires de la remorque de sorte que le plan vertical longitudinal médian du véhicule soit aligné au moins à une trace longitudinale d'un plan vertical longitudinal médian de la remorque ; ou bien les moyens oscillants (1) oscillent par l'intermédiaire d'un levier (11) par rapport à la remorque et les moyens de butée (2) sont solidaires du véhicule de sorte qu'un plan vertical longitudinal médian de la remorque soit aligné au moins à une trace longitudinale d'un plan vertical longitudinal médian du véhicule ; le levier (11) comprend au moins un rouleau (12) placé au centre du levier (11) à l'intérieur du logement concave (21) et est actionné par un actionneur (3) ; le rouleau (12) est fixé au levier (11) par un pivot pour coulisser par rapport au logement concave (21) et permettre aux moyens de butée (2) de recevoir le rouleau (12) des moyens oscillants (1) dans le logement concave (21) ; le logement concave (21) est apte à recevoir, et éventuellement loger de manière stable, les moyens oscillants (1) de sorte que le plan vertical longitudinal médian du véhicule soit aligné au moins à une trace longitudinale du plan vertical longitudinal médian de la remorque ; le rouleau (12) fait pression sur le logement concave (21) intégral avec la remorque ; le rouleau (12) est enfoncé vers le bas sur le logement concave (21) à l'aide d'un ressort pneumatique ou d'un élément élastique ; le logement concave (21) est placé de sorte que le rouleau (12) soit inséré quand le véhicule tracteur et la remorque sont alignés dans le sens longitudinal ; les moyens de butée (2) comprennent au moins un guide (22, 23) apte à permettre un glissement libre du rouleau (12) ; le rouleau (12) est découplé par rapport au logement concave (21) en raison d'une inclinaison du véhicule par rapport à la remorque qui est supérieure à un angle donné ; le rouleau (12) se trouve avec son axe de rotation dans un plan vertical longitudinal médian du véhicule ou de la remorque ; le logement concave (21) et au moins l'un des guide (22, 23) est placé symétriquement par rapport au plan vertical longitudinal médian de la remorque ou du véhicule.

2. Système de contrôle des oscillations de lacet d'un véhicule avec remorque selon la revendication précédente, **caractérisé en ce que** le logement concave (21) est formé par un couple de plans symétriques inclinés d'environ 45° ; le rouleau (12) est apte à faire pression contre le couple de plans inclinés d'environ 45° tout en restant soulevé par rapport au fond du logement concave (21).

3. Système de contrôle des oscillations de lacet d'un véhicule avec remorque selon l'une des revendications précédentes, **caractérisé en ce que** l'actionneur (3) comprend au moins un élément élastique (31) apte à exercer une force contrôlée sur les moyens de butée (2) à travers les moyens oscillants (1) en fonction au moins d'un paramètre qui est choisi, de préférence, entre la charge transportée, la vitesse du véhicule avec remorque, l'angle d'inclinaison de la remorque par rapport au véhicule.

4. Système de contrôle des oscillations de lacet d'un véhicule avec remorque selon la revendication précédente, **caractérisé en ce que** l'élément élastique (31) exerce une force de valeur croissante en fonction de l'augmentation de la vitesse de mouvement du véhicule et une force de valeur minimale ou nulle en fonction de l'augmentation de l'angle d'inclinaison de la remorque par rapport au véhicule.

5. Système de contrôle des oscillations de lacet d'un véhicule avec remorque selon la revendication précédente, **caractérisé en ce que** l'élément élastique (31) comprend un ressort pneumatique et **en ce que** l'énergie utilisée pour piloter l'actionneur (3) dérive d'un système de suspension du véhicule et/ou de la remorque.

6. Système de contrôle des oscillations de lacet d'un véhicule avec remorque selon la revendication 1, **caractérisé en ce qu'**il comprend des dispositifs d'amortissement pour dégrader une énergie due au frottement afin d'obtenir un effet d'amortissement des oscillations de lacet et **en ce que** le rouleau (12) est fixé par un pivot sur son axe de rotation à travers au moins un support de frottement.
